# EUROPÄISCHE PATENTSCHRIFT

(11) **EP 3 446 019 B1**
(45) Veröffentlichungstag und Bekanntmachung des Hinweises auf die Patenterteilung: **26.02.2020**
(21) Anmeldenummer: 17719202.8
(22) Anmeldetag: 11.04.2017
(51) Int. Cl.: F16L 23/04, F16L 25/00, F16L 37/113

(54) **ANSCHLUSSVORRICHTUNG**
CONNECTION DEVICE
DISPOSITIF DE RACCORDEMENT

(30) Priorität: 18.04.2016 DE 102016107159
(43) Veröffentlichungstag der Anmeldung: 27.02.2019
(73) Patentinhaber: Sartorius Stedim Biotech GmbH, 37079 Göttingen (DE)
(72) Erfinder: AUE, Norbert, 37120 Bovenden (DE); HANDT, Sebastian, 37085 Göttingen (DE); PURMANN, Sebastian, 37073 Göttingen (DE); LIMPERT, Volker, 34326 Morschen (DE)
(74) Vertreter: Schneider, Peter Christian
(86) Internationale Anmeldenummer: PCT/EP2017/058694
(87) Internationale Veröffentlichungsnummer: WO 2017/182335

(56) Entgegenhaltungen:
- FR-A1- 2 895 057
- US-A- 4 570 673
- US-A1- 2010 253 075
- US-A1- 2013 089 994
- US-B2- 8 328 457
- US-B2- 9 012 791

## Beschreibung

### Gebiet der Erfindung

Die Erfindung bezieht sich auf eine Anschlussvorrichtung, umfassend
- einen Leitungsabschnitt mit einem endständigen nach radial außen kragenden Anlageflansch zur Anlage eines korrespondierenden Anlageflansches eines an den Leitungsabschnitt anzukoppelnden, weiteren Leitungsabschnitts und
- eine Ringsegmentkette, umfassend eine Mehrzahl von in einer gemeinsamen Ringebene schwenkbar miteinander verbundenen Ringsegmenten, wobei die die Kettenenden bildenden Ringsegmentenden zur Bildung einer ringförmigen Anschlussklemme miteinander verrastbar sind.

### Stand der Technik

Derartige Anschlussvorrichtungen sind bekannt aus der US 8,328,457 B2.

Zur Verbindung von Leitungsabschnitten, beispielsweise von Schlauch- oder Rohrabschnitten untereinander oder miteinander, sind sogenannte Tri-Clamps (Synonyme: Tri-clover fitting, Sanitary fitting) als standardisierte Anschlussklemmen bekannt. Unter einer Tri-Clamp versteht man eine klappbare Anschlussklemme (Klammer) mit zwei axial beabstandeten Klemmflanschen, die leicht angeschrägt zueinander angeordnet sind, sodass sich zwischen ihnen ein sich nach radial innen weitender, keilförmiger Ringraum bildet. Eine solche Klammer eignet sich zur Verbindung zweier Leitungsabschnitte, die jeweils endständig einen nach radial außen kragenden Anlageflansch aufweisen und einander mit ihrer jeweiligen Anlagefläche kontaktieren. Die Klammer wird so um die aneinander anliegenden Anlageflansche geklappt, dass die Klemmflansche die jeweiligen Rückseiten der Anlageflansche kontaktieren. Die zum Zusammenklappen der Klammer eingesetzte Kraft wird über die Schrägen der Klemmflansche in eine Axialkraft umgelenkt, die als Anpresskraft auf die aneinander anliegenden Anlageflächen der Anlageflansche wirkt. Um die Klammer in zusammengeklapptem Zustand zu halten, sind deren freie Enden miteinander verbindbar. Aus der vorgenannten, gattungsbildenden Druckschrift ist eine Verrastung der freien Enden der schwenkbar miteinander verbundenen Ringsegmente der Klammer bekannt.

Nachteilig ist, dass die Anpresskraft zwischen den Leitungsabschnitten unmittelbar von der Handkraft des Monteurs, mit der dieser die freien Enden der Ringsegmente aneinander drückt, abhängig ist. Diese Handkraft kann zwar durch den Einsatz von Werkzeugen vergrößert werden; dies verkompliziert und verlangsamt jedoch den Montageprozess.

Aus der genannten Druckschrift ist eine aus zwei halbkreisförmigen Ringsegmenten aufgebaute Klammer bekannt. Es sind jedoch auch Klammern, die aus mehr als zwei Ringsegmenten aufgebaut sind, bekannt. In jedem Fall bildet die Klammer im offenen Zustand eine Ringsegmentkette mit einer Mehrzahl von Ringsegmenten, die schwenkbar miteinander verbunden sind. Bei Verschwenkung bewegen sich die Ringelemente relativ zueinander in einer Ringebene, die im zugeklappten Zustand der Ringebene der resultierenden, ringförmigen Anschlussklemme entspricht.

Aus der US 2010/0253075 A1 ist eine nicht-klappbare, glockenförmige Anschlussklemme bekannt. Das Glockendach bildet einen ersten Klemmflansch; am Glockenrand ist ein nach radial innen kragender, zweiter Klemmflansch vorgesehen. Aufgrund von Vertikalschlitzen in der Glockenwand lässt sich der Glockenrand und mit ihm der zweite Klemmflansch elastisch aufweiten. Daher kann die Glocke axial über die aneinander anliegenden Anlageflansche zweier Leitungsabschnitte geschoben werden und hält diese formschlüssig zusammen. Zur Erhöhung der Anpresskraft wird auf ein Außengewinde der Glocke eine Mutter aufgeschraubt, wodurch der Glockenrand und mit ihm der zweite Klemmflansch nach radial innen verengt werden. Aufgrund einer relativen Schrägstellung von erstem Klemmflansch (Glockendach) und zweitem Klemmflansch (Glockenrand) wird hierdurch eine axial auf die Anlageflansche wirkende Anpresskraft erzeugt.

Aus der US 9,012,791 B1 ist eine klappbare Rohrenden-Schutzmutter bekannt. Sie soll Mäntel von in einem Führungsrohr geführten Kabeln vor Beschädigung durch scharfe Grate am Rohrende schützen. Es handelt sich dabei um einen Schraubdeckel mit großer zentraler Öffnung, dessen Rand gerade so breit ist, dass er nach radial innen über die scharfgratige Innenkante des Rohres übersteht. Um seine Montage auch bei bereits im Führungsrohr verlegten Kabeln durchführen zu können, ist die Schutzmutter aus zwei in einer gemeinsamen Ringebene verschwenkbar miteinander verbundenen Ringsegmenten aufgebaut, deren freie Enden miteinander verrastbar sind.

Aus der FR 2 895 057 A ist eine Anschlussvorrichtung bekannt. Sie umfasst einen Leitungsabschnitt mit einem nach radial außen kragenden Anlageflansch und eine ringförmige Anschlussklemme mit einem nach radial innen kragenden Klemmflansch. Der Leitungsabschnitt und die Anschlussklemme haben zueinander korrespondierende Gewindemittel.

### Aufgabenstellung

Es ist die Aufgabe der vorliegenden Erfindung, eine gattungsgemäße Anschlussvorrichtung derart weiterzubilden, dass ohne Notwendigkeit von zusätzlichem Werkzeug oder von Schraubenmuttern und Spannbolzen als Arretierungseinrichtungen wie bei herkömmlichen Tri-Clamp-Verbindungen eine erhöhte Anpresskraft der Anlageflansche der miteinander zu koppelnden Leitungsabschnitte ermöglicht wird. Insbesondere ist es Aufgabe der Erfindung, dies ohne Modifikation des nicht zur Erfindung selbst gehörenden, mit dem ersten Leitungsabschnitt zu koppelnden, weiteren (zweiten) Leitungsabschnitts zu erreichen.

### Darlegung der Erfindung

Diese Aufgabe wird in Verbindung mit den Merkmalen des Oberbegriffs von Anspruch 1 dadurch gelöst, dass der Leitungsabschnitt als ein rohrartiger Anschlussstutzen mit axial von der Anlagefläche seines Anlageflansches beabstandeten ersten Gewindemitteln ausgebildet ist
und dass jedes Ringsegment einen nach radial innen kragenden Klemmflansch und axial von diesem beabstandete, zu den ersten Gewindemitteln korrespondierende, zweite Gewindemittel aufweist.

Bevorzugte Ausführungsformen der Erfindung sind Gegenstand der abhängigen Ansprüche.

Ein erster Aspekt der vorliegenden Erfindung ist es, den ersten Leitungsabschnitt gegenüber dem Tri-Clamp-Standard zu modifizieren, insbesondere um erste Gewindemittel zu erweitern, die axial beabstandet von der Anlagefläche seines Anlageflansches angeordnet sind. Zur speziellen Ausgestaltung der Gewindemittel werden weiter unten noch verschiedene Ausführungsbeispiele genannt.

Ein zweiter Aspekt der vorliegenden Erfindung ist es, auch die Anschlussklemme gegenüber dem Tri-Clamp-Standard auf spezielle Weise zu modifizieren, insbesondere anstelle eines zweiten Klemmflansches zweite Gewindemittel einzusetzen, die mit den ersten Gewindemitteln zur Bildung eines Gewindes wechselwirken.

Wie von dem oben erläuterten Tri-Clamp-Prinzip bekannt, wird die Anschlussklemme zunächst um die aneinander anliegenden Anlageflansche des Leitungsabschnitts und des weiteren Leitungsabschnittes geklappt, wobei der Klemmflansch an der Rückseite des Anlageflansches des weiteren Leitungsabschnitts anliegt und die ersten und zweiten Gewindemittel zur Bildung eines Gewindes ineinander greifen. Hierbei kann optional bereits durch geeignete Anordnung von Flanschschrägen ähnlich dem erläuterten Tri-Clamp-Prinzip eine vorläufige Anpresskraft auf die aneinander anliegenden Anlageflansche erzeugt werden. Eine anschließende Rotation der geschlossenen Anschlussklemme relativ zum Anschlussstutzen führt dann aufgrund der Wechselwirkung der ersten und zweiten Gewindemittel miteinander zu einer axialen Bewegung der geschlossenen Anschlussklemme und damit zur Erzeugung einer zusätzlichen Axialkraft, die die auf die Anlageflansche bzw. Dichtfläche wirkende Anpresskraft erhöht. Das hierfür notwendige, manuell aufzubringende Drehmoment kann durch Wahl der Gewindesteigung und des Durchmessers der Anschlussklemme an die Erfordernisse des Einzelfalls angepasst werden. Auf diese Weise kann mit einem geringeren manuell aufzubringenden Drehmoment als beim herkömmlichen Tri-Clamp-Standard die notwendige Anpresskraft für eine dichtende Verbindung erzielt werden.

Bei einer ersten bevorzugten Ausführungsform der Erfindung ist vorgesehen, dass die ersten Gewindemittel als eine der Anzahl der Ringsegmente entsprechende Mehrzahl von über den Umfang des Anschlussstutzens verteilten Rampenabschnitten ausgebildet sind, deren Schrägen an ihren dem Anlageflansch abgewandten Seiten angeordnet sind, und die zweiten Gewindemittel als eine gleiche Mehrzahl von korrespondierend über den Umfang der (geschlossenen) Anschlussklemme verteilten Rampenabschnitten ausgebildet sind, deren Schrägen an ihren dem Klemmflansch zugewandten Seiten angeordnet sind. Mit anderen Worten wird ein Gewinde realisiert, dessen Gangzahl der Anzahl der Ringsegmente entspricht, wobei jedoch jeder Gewindegang nur einen Bruchteil 1/N eines Umlaufs lang ist, wobei N die Anzahl der Ringsegmente ist. Bei einer aus zwei Ringsegmenten aufgebauten Anschlussklemme führt dies somit zu einem zweigängigen Gewinde, wobei jeder Gewindegang die Länge eines halben Umlaufs hat. Die Gewindegänge überlappen einander nicht. Die Anschlussklemme lässt sich daher maximal um einen Bruchteil 1/N eines Umlaufs drehen. Der Vorteil einer Ausführungsform mit N = 2 Ringsegmenten liegt in der Vergrößerung der Anlagefläche zwischen den ersten und den zweiten Gewindemitteln, die im gespannten Zustand nahezu über 50 % des Umfang aneinander anliegen, während sie über die verbleibenden 50 % des gesamten Umfangs freiliegen. Die Anlagefläche in gespanntem Zustand lässt sich bei einer weiteren Ausführungsform durch ein einziges durchgehendes erstes Gewindemittel maximieren. Hierdurch werden auch bei Verwendung von geringfügig verformbarem Kunststoffmaterial solche Verformungen vermieden, die ggf. zu Undichtigkeiten führen könnten.

Insbesondere bei Verwendung von im Wesentlichen unverformbaren Materialien kann eine material- und gewichtssparende, zweite Variante von Vorteil sein, bei der die ersten Gewindemittel als eine Mehrzahl von über den Umfang des Anschlussstutzens verteilten, nach radial außen vorstehenden lokalen Haltevorsprüngen ausgebildet sind und die zweiten Gewindemittel als eine gleiche Mehrzahl von korrespondierend über den Umfang der Anschlussklemme verteilten Schrägschlitzen in den Wandungen der Ringsegmente ausgebildet sind. Dies entspricht dem Prinzip der aus dem Elektronikbereich bekannten BNC-Anschlüsse ("Bayonet Neill Concelman"-Anschlüsse).

Um nach dem erfindungsgemäßen Verspannen einer Verbindung zweier Leitungsabschnitte ein unbeabsichtigtes Lösen dieser Kopplung zu vermeiden, kann bei einer Weiterbildung der Erfindung vorgesehen sein, dass der Anschlussstutzen nach radial außen wirkende, erste Rastmittel und eines der Ringsegmente korrespondierende, nach radial innen wirkende, zweite Rastmittel aufweist, die in wechselwirkendem Zustand eine Relativrotation der Anschlussklemme zum Anschlussstutzen in Löserichtung verhindern. Die ersten und zweiten Rastmittel sind bevorzugt in Umfangsrichtung relativ zueinander so angeordnet, dass sie lediglich im gespannten Zustand der Anschlussvorrichtung miteinander wechselwirken. Auf diese Weise erhält der Monteur, der den Rastvorgang beispielsweise an einem entsprechenden Rastgeräusch, einem Rastclick oder einer mechanischen Blockade wahrnimmt, eine Rückmeldung, ob er das Gewinde durch Verdrehen der Anschlussklemme in Spannrichtung bereits hinreichend angezogen hat.

Die zweiten Rastmittel sind bevorzugt axial zwischen dem Klemmflansch und der Wechselwirkungsfläche der zweiten Gewindemittel angeordnet. Hieraus folgt, dass die korrespondierenden, ersten Rastmittel bei dieser Ausführungsform axial zwischen der Anlagefläche des Anlageflansches und der Wechselwirkungsfläche des ersten Gewindemittels angeordnet sind. Bei der bevorzugten Ausführungsform der Erfindung sind der Anlageflansch und die ersten Gewindemittel, die beide über die Wandung des Anschlussstutzens nach radial außen vorspringen, axial voneinander beabstandet. In dieser Lücke können die ersten Rastmittel Platz finden. Die korrespondierende Anschlussklemme weist eine Lücke zwischen Klemmflansch und den zweiten Gewindemitteln, die gleichermaßen axial voneinander beabstandet sind und nach radial innen vorspringen, auf. In dieser Lücke finden die zweiten Rastmittel raumsparend Platz. Die zweiten Rastmittel können auch in oder an einer Trägerstruktur der ersten Gewindemittel angeordnet sein. Es sind allerdings auch Ausführungsformen denkbar, bei denen die rückwärtige Seite des Anlageflansches zugleich die ersten Gewindemittel trägt. In diesem Fall fehlt eine zur Anordnung der ersten Rastmittel geeignete Lücke zwischen Anlageflansch und ersten Gewindemitteln.

Unabhängig von der konkreten Positionierung der zweiten Rastmittel ist bei einer bevorzugten Ausführungsform der Erfindung vorgesehen, dass die zweiten Rastmittel als eine manuell lösbare Rastwippe ausgebildet sind. Hierdurch können die miteinander wechselwirkenden ersten und zweiten Rastmittel zwar ein unbeabsichtigtes Lösen der erfindungsgemäß hergestellten Verbindung verhindern; gleichwohl ist es bei Bedarf möglich, die Verbindung bewusst zu lösen. Der Fachmann wird in Ansehung der Erfordernisse des Einzelfalls entscheiden können, ob eine lösbare oder eine unlösbare Verbindung realisiert werden soll. Bei einer lösbaren Verbindung kann die Rastwippe beispielsweise mit einem Betätigungsabschnitt ausgestattet sein.

Der Fachmann wird im Rahmen der obigen Erläuterungen erkannt haben, dass ein die Anlageflansche der Leitungsabschnitte umgreifendes Schließen der Anschlussklemme nicht in allen Drehwinkellagen der Anschlussklemme relativ zum Anschlussstutzen möglich ist. Typischerweise wird dies vielmehr nur in einer Drehwinkellage möglich sein, von der ausgehend eine Rotation in Spannrichtung möglich ist. Um ein leichteres Auffinden dieser Startposition zu ermöglichen, ist bei einer bevorzugten Weiterbildung der Erfindung vorgesehen, dass der Anschlussstutzen einen nach radial außen vorstehenden, ersten Rotationsanschlag und eines der Ringsegmente einen korrespondierenden, zweiten Rotationsanschlag aufweist. Die Rotationsanschläge sind selbstverständlich so zu positionieren, dass sie bei Anlage aneinander die oben erläuterte Startposition definieren. Bei einer solchen Ausführungsform kann das den zweiten Rotationsanschlag tragende Ringsegment bei geöffnetem Zustand der Anschlussklemme mit seinem zweiten Rotationsanschlag am ersten Rotationsanschlag angelegt werden. Bei dieser Ausrichtung ist ein Schließen der Anschlussklemme und ein Verrasten ihrer freien Enden ohne weiteres möglich. Zudem verhindern die Rotationsanschläge eine versehentliche Verdrehung in Löserichtung. Lediglich eine Verdrehung in Spannrichtung ist möglich und kann vorzugsweise nach Einrasten der ersten und zweiten Rastmittel miteinander beendet werden.

Zur speziellen Gestaltung der Rotationsanschläge kann vorgesehen sein, dass der eine der Rotationsanschläge als eine Schlitzlasche mit einseitig tangential offenem Rastschlitz und der zweite der Rotationsanschläge als ein axial erstreckter, korrespondierender Raststift ausgebildet ist. Durch die Ausgestaltung der Rotationsanschläge als miteinander wechselwirkende Rastelemente ist eine Vorpositionierung der noch geöffneten Anschlussklemme am Anschlussstutzen möglich. Der Raststift, der bevorzugt an einem der Ringsegmente festgelegt ist, kann ein freies Ende aufweisen, an welchem ein Stiftkopf angeordnet ist, der breiter als die Breite des Rastschlitzes ist. Diese Gestaltung ermöglicht eine Unverlierbarkeit der vorpositionierten, noch geöffneten Anschlussklemme in rotativer Richtung (Rastschlitz) und in axialer Richtung (Stiftkopf). Bei einer weiteren Ausführungsform kann der Raststift als Doppelstiftkopf ausgebildet sein.

Eine solch unverlierbare Vorpositionierbarkeit der noch geöffneten Anschlussklemme am Anschlussstutzen hat sich bei der bevorzugten Nutzungsform der Erfindung als besonders vorteilhaft erwiesen. Hierbei ist nämlich vorgesehen, dass besagter Anschlussstutzen Teil eines Behältnisses, beispielsweise eines Bioreaktors, oder Teil einer Filtercapsule, oder eines Leitungssystems ist, der vom Behälter- bzw. Capsulenhersteller zusammen mit einer vorpositionierten, noch geöffneten Anschlussklemme an den Benutzer geliefert wird. Der Benutzer seinerseits kann nach herkömmlichem Tri-Clamp-Standard konfigurierte und mit entsprechenden Anlageflanschen versehene Schlauch- oder Rohrleitungen sowie die notwendige Dichtung anschließen und dabei ohne Modifikation der eigenen Ausrüstung die erfindungsgemäße und für den Behälterhersteller spezifische, vorteilhafte Verbindungstechnik nutzen.

Weitere Merkmale und Vorteile der Erfindung ergeben sich aus der nachfolgenden speziellen Beschreibung und den Zeichnungen.

### Kurzbeschreibung der Zeichnungen

Es zeigen:
- Figur 1:: einen erfindungsgemäßen Anschlussstutzen in einer ersten Ansicht,
- Figur 2:: den Anschlussstutzen von Figur 1 in einer zweiten Ansicht,
- Figur 3:: ein erstes Ringsegment einer erfindungsgemäßen Anschlussklemme,
- Figur 4:: ein zweites Ringsegment der erfindungsgemäßen Anschlussklemme,
- Figur 5:: der Anschlussstutzen der Figuren 1 und 2 mit einer vormontierten, aus den Ringsegmenten der Figuren 3 und 4 bestehenden Anschlussklemme in geöffnetem Zustand,
- Figur 6:: Anschlussstutzen und Anschlussklemme von Figur 5 in geschlossenem Zustand in Lösestellung,
- Figur 7:: Anschlussstutzen und Anschlussklemme von Figur 6 in verspannter Stellung und
- Figur 8:: Anschlussstutzen von Figur 1 mit modifizierter Anschlussklemme in verspannter Stellung.

### Ausführliche Beschreibung bevorzugter Ausführungsformen

Gleiche Bezugszeichen in den Figuren weisen auf gleiche oder analoge Elemente hin.

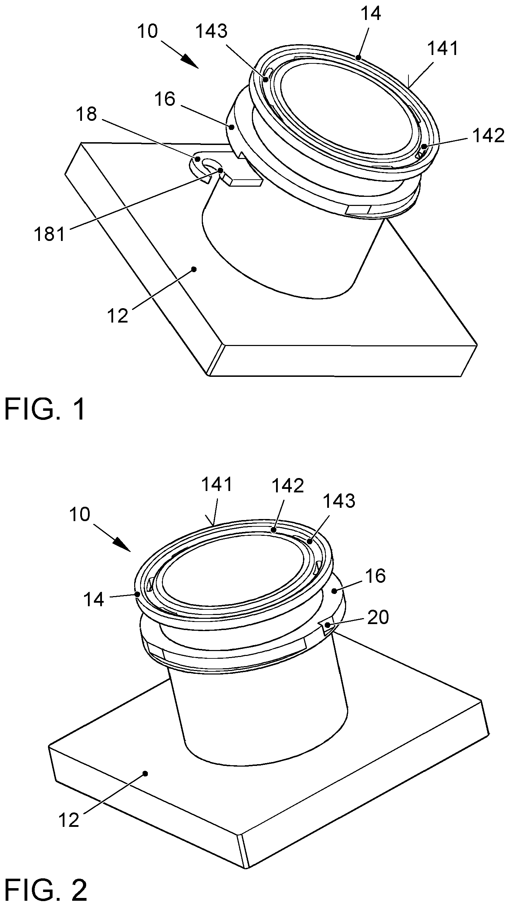

Die Figuren 1 und 2 zeigen einen Anschlussstutzen 10 in einer bevorzugten Ausführungsform der vorliegenden Erfindung. Der Anschlussstutzen 10 ist fest an der Wandung 12 eines im Übrigen nicht dargestellten Behälters, beispielsweise eines Bioreaktors, Leitungssystems, oder beispielsweise an einer Filtercapsule befestigt. Vorzugsweise ist der Anschlussstutzen 10 einstückig mit der Behälter-, Leitungs- oder Capsulenwandung 12 ausgebildet. Der Anschlussstutzen 10 weist an seinem freien Ende einen nach radial außen kragenden Anlageflansch 14 auf. Dieser Anlageflansch 14 dient zur Anlage eines korrespondierenden Anlageflansches eines nicht dargestellten, weiteren Leitungsabschnitts, beispielsweise eines Schlauches oder eines Rohres, der bzw. das fluiddicht an den Behälter oder die Capsule angeschlossen werden kann. Bei der gezeigten Ausführungsform weist die Anlagefläche 141 des Anlageflansches 14 eine Dichtungsnut 142 auf, in welche eine vorzugsweise elastische Dichtung einlegbar ist. Die Dichtungsnut 142 kann Arretierungsdurchbrüche 143 aufweisen, welche eine Verankerung der Dichtung erlauben, sodass die Dichtung beim Zusammenführen der Flansche nicht verrutscht. Die vorgenannten Arretierungsdurchbrüche können auch als Hilfsmittel für das Zweikomponentenspritzen des Anschlusses und der Dichtung verwendet werden.

Mit axialem Abstand von dem Anlageflansch 14 wird der Anschlussstutzen 10 von einem Rampenring 16 umlaufen. Der Rampenring 16 besteht aus zwei Rampenabschnitten, die um 180° versetzt den Umfang des Anschlussstutzens 10 jeweils etwa hälftig umlaufen. Die Schrägen der Rampenabschnitte sind an der dem Anlageflansch 14 abgewandten Seite des Rampenrings 16 gelegen, d.h. unten in Figur 1. Dies ist insbesondere in Figur 1 gut zu erkennen, in welcher links eine Kante zwischen den beiden Rampenabschnitten sichtbar ist.

Der Fachmann wird erkennen, dass es im Rahmen der Erfindung der in den Figuren 1 und 2 dargestellten axialen Lücke zwischen dem Anlageflansch 14 und dem Rampenring 16 nicht zwingend bedarf. Vielmehr ist es auch möglich, den Rampenring 16 in unmittelbarem Kontakt zur rückwärtigen Schulter des Anlageflansches 14 zu positionieren, was aufgrund einer Verkürzung und geometrischen Vereinfachung des Aufbaus zu einer verbesserten Stabilität und Dichtwirkung führt.

In Figur 1 ist weiter eine Schlitzlasche 18 erkennbar, die unterhalb des Rampenrings 16 nach radial außen aus der Wandung des Anschlussstutzens 10 vorspringt und einen einseitig tangential offenen Rastschlitz 181 trägt, auf dessen Bedeutung weiter unten noch näher eingegangen werden soll.

In Figur 2 ist eine Rastnut 20 im Bereich des Rampenringes 16 erkennbar. Auf die Bedeutung dieser Rastnut 20 soll ebenfalls weiter unten noch näher eingegangen werden.

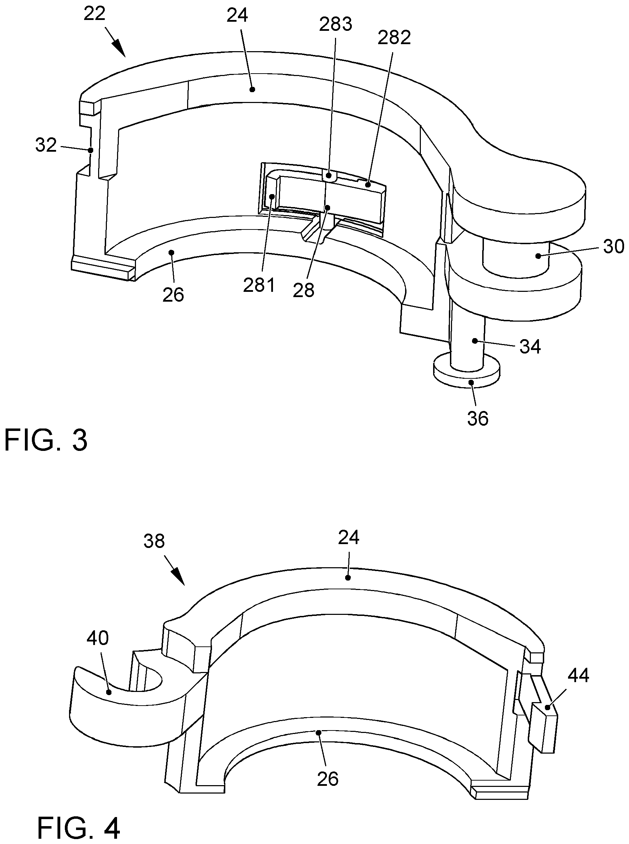

Die Figuren 3 und 4 zeigen jeweils ein Ringsegment, aus welchen eine erfindungsgemäße Anschlussklemme aufgebaut sein kann. Das Ringsegment 22 der Figur 3 überspannt einen Bogen von ca. 180°. An seinem in Figur 3 oberen Rand weist es einen nach radial innen kragenden Klemmflansch 24 auf. Hiervon axial beabstandet, d.h. am gegenüberliegenden Rand des Ringelementes 22, erstreckt sich ein Rampenabschnitt 26, dessen dem Klemmflansch 24 zugewandte Seite die Rampenschräge aufweist. Die Rampenschräge des Rampenabschnittes 26 des Ringelementes 22 korrespondiert zu der Rampenschräge der Rampenabschnitte des Rampenrings 16 des Anschlussstutzens 10.

In der axialen Lücke zwischen dem Klemmflansch 24 und dem Rampenabschnitt 26 ist eine Rastwippe 28 ausgebildet, welche die Wandung des Ringsegmentes 22 durchgreift. Ein nach radial innen elastisch vorgespannter Hakenabschnitt 281 ragt in die Krümmung des Ringsegmentes 22 hinein. Ein am anderen Ende der Rastwippe 28 gelegener Betätigungsabschnitt 282 ragt hingegen nach radial außen aus dem Ringsegment 22 hinaus. Die Rastwippe 28 ist um eine Achse 283 schwenkbar gelagert. Ein von radial außen auf den Betätigungsabschnitt 282 aufgebrachter Druck lässt den Hakenabschnitt 281 nach außen schwenken.

Rechts in Figur 3 ist eine an dem Ringsegment 22 angeordnete Schwenkachse 30 erkennbar, deren Bedeutung nachfolgend im Zusammenhang mit Figur 4 erläutert werden soll.

Links in Figur 3 ist eine Rastnut 32 erkennbar, deren Bedeutung ebenfalls nachfolgend im Zusammenhang mit Figur 4 erläutert werden soll.

Schließlich ist in Figur 3 noch ein Raststift 34 erkennbar, der unterhalb der Schwenkachse 30 am Ringsegment 22 festgelegt ist und dessen freies Ende einen Stiftkopf 36 breiteren Durchmessers aufweist. Position und Dimensionierung des Raststiftes 34 sind so gewählt, dass der Raststift 34 in den Rastschlitz 181 der Schlitzlasche 18 des Anschlussstutzens 10 einrasten kann, wobei der Durchmesser des Stiftkopfes 36 größer als die Breite des Rastschlitzes 181 gewählt ist. Auf die funktionale Bedeutung dieser Elemente soll weiter unten noch näher eingegangen werden.

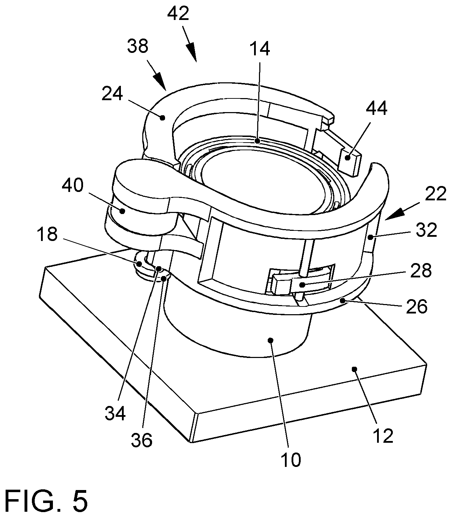

Figur 4 zeigt ein weiteres Ringsegment 38, welches schwenkbar mit dem zuvor beschriebenen Ringsegment 22 verbunden werden kann. Hierzu ist in Figur 4 links ein Rasthaken 40 vorgesehen, welcher rastend die Schwenkachse 30 zu umgreifen vermag. Ringelement 22 und weiteres Ringelement 38 sind dann um die Schwenkachse 30, d.h. in einer senkrecht zur Schwenkachse 30 liegenden Ringebene, schwenkbar verbunden. Da auch das weitere Ringelement 38 eine Bogenlänge von etwa 180° aufweist, lässt sich die so entstandene Ringelementkette durch Zusammenklappen zu einer ringförmigen Anschlussklemme 42, wie sie in den Figuren 5-7 gezeigt ist, schließen. Um die Ringelemente 22, 38 im geschlossenen Zustand auch an ihren freien Enden miteinander zu fixieren, weist das weitere Ringelement 38 rechts in Figur 4 einen endständigen Rasthaken 44 auf, der rastend mit der Rastnut 32 des Ringsegmentes 22 von Figur 3 wechselwirken kann.

Im Übrigen weist auch das weitere Ringsegment 38 einen in Figur 4 oberen Klemmflansch 24 und einen in Figur 4 unteren Rampenabschnitt 26 auf. Bezüglich dieser Elemente kann auf die Erläuterung zu den entsprechenden Elementen des Ringsegments 22 von Figur 3 verwiesen werden. Dabei ist jedoch darauf hinzuweisen, dass die Klemmflansche 24 der Ringsegmente 22, 38 so gestaltet sind, dass ihre axial inneren, d.h. in den Figuren 3 und 4 unteren Ränder einander bündig fortsetzen. Die Rampenabschnitte 26 sind jedoch so gestaltet, dass sie zwei um 180° versetzten, jeweils 180° langen Gängen eines Gewindes entsprechen.

Figur 5 zeigt eine aus den Ringsegmenten 22, 38 der Figuren 3 und 4 aufgebaute Anschlussklemme 42, die in noch geöffnetem Zustand an einem Anschlussstutzen 10 der Figuren 1 und 2 vorfixiert ist. Zur Vorfixierung ist der Raststift 34 des Ringsegmentes 22 in dem Rastschlitz 181 des Anschlussstutzens 10 eingerastet. Der Stiftkopf 36 verhindert dabei ein axiales Lösen. Die geöffnete Anschlussklemme 22 bzw. die aus den Ringsegmenten 22, 38 aufgebaute Ringsegmentkette ist somit unverlierbar am Anschlussstutzen 10 vorfixiert. In diesem Zustand können bevorzugt Behälter, Leitungssysteme oder Filtercapsulen mit einer erfindungsgemäßen Anschlussvorrichtung ausgeliefert werden, sodass der Kunde eigene Leitungen, die gemäß herkömmlichem Tri-Clamp-Standard gestaltet sind, selbstständig und unter Ausnutzung der erfindungsgemäßen Vorteile anschließen kann.

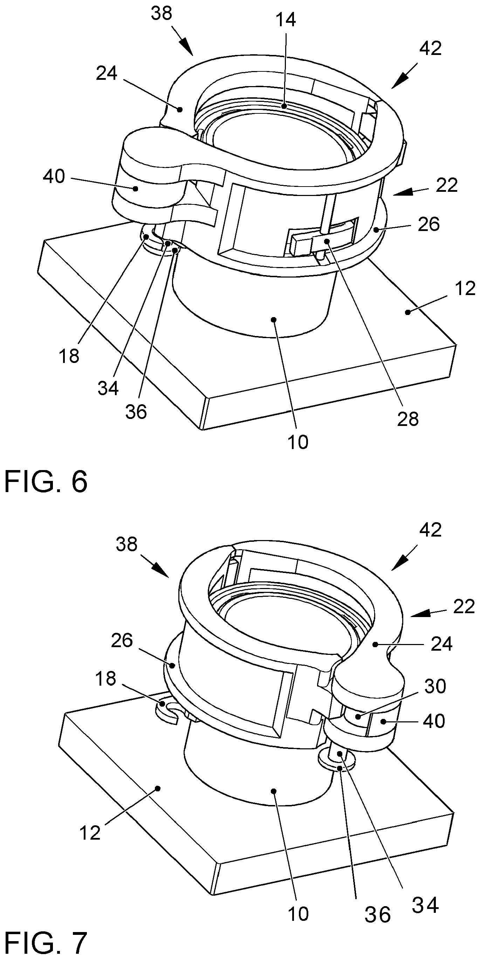

Figur 6 zeigt das Ensemble von Figur 5, jedoch mit geschlossener Anschlussklemme 42. Hierzu sind der Rasthaken 44 und die Rastnut 32 an den bis dahin freien Enden der Ringsegmente 22, 38 miteinander verrastet. Der Fachmann wird jedoch verstehen, dass diese Darstellung lediglich zur Illustration des Prinzips gedacht ist und eines von mehreren möglichen Szenarien darstellt. In der Praxis wird vor dem Schließen der Anschlussklemme 42 ein an den Anschlussstutzen 10 anzuschließender, weiterer Leitungsabschnitt mit seinem Anlageflansch sowie die entsprechende Dichtung auf die Anlagefläche 141 des Anlageflansches 14 des Anschlussstutzens 10 aufgelegt, sodass der Klemmflansch 24 der Anschlussklemme 42 auf der rückwärtigen Schulter des Anlageflansches des anzukoppelnden Leitungsabschnitts anliegt. Dies entspricht dem bekannten Tri-Clamp-Prinzip. Anschrägungen des Klemmflansches 24 und/oder der rückwärtigen Schulter des Anlageflansches des anzukoppelnden Leitungsabschnittes führen dabei zu einem Voranpressen der zu koppelnden Anlageflansche.

Figur 7 zeigt die Endposition der erfindungsgemäßen Klemmvorrichtung, bei der die Anschlussklemme 42 um eine viertel Drehung (in Figur 7 im Gegen-Uhrzeigersinn) relativ zum Anschlussstutzen 10 verdreht ist. Dies führt aufgrund der gewindeartigen Wechselwirkung der Rampenabschnitte 26 der Anschlussklemme 42 mit den Rampenabschnitten des Rampenrings 16 des Anschlussstutzens 10 zu einer axialen Verschiebung der Anschlussklemme 42 in Richtung auf die Behälter- bzw. Capsulenwandung 12. Hierdurch wird die von dem Klemmflansch 24 der Anschlussklemme 42 hintergriffene, rückwärtige Schulter des Anlageflansches des anzukoppelnden Leitungsabschnittes auf die Anlagefläche 141 des Anlageflansches 14 des Anschlussstutzens 10 gezogen, was zu einer dichtenden Anpressung beider Anlagenflansche aneinander führt.

In Figur 7 nicht erkennbar ist, dass bei der dargestellten Ausführungsform der Rasthaken 281 der Rastwippe 28 exakt in dem Bereich der Rastnut 20 am Anschlussstutzen 10 positioniert wird und hier einrastet. Auf diese Weise wird eine nachfolgende Rotation in Löserichtung (d.h. im Uhrzeigersinn bei der gezeigten Ausführungsform) verhindert. Um jedoch die Möglichkeit eines bewussten Lösens der Kopplung zu erhalten, lässt sich die Verrastung des Hakenabschnitts 281 und der Rastnut 20 durch manuellen Druck auf den Betätigungsabschnitt 282 der Rastwippe 28 lösen.

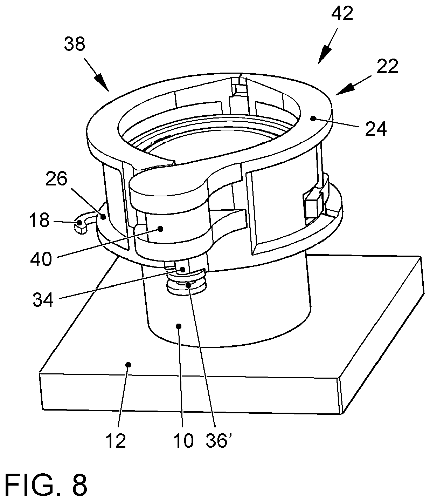

Figur 8 zeigt die Konstellation von Figur mit leicht modifizierter Anschlussklemme 42. Der Raststift 34 weist hier einen doppelten Stiftkopf 36' auf. Die Schlitzlasche 181 der Schlitzlasche 18 kann bei dieser Ausführungsform zwischen die beiden Einzelscheiben des doppelten Stiftkopfes 36' greifen und dadurch eine präzise axiale Fixierung gewährleisten.

Natürlich stellen die in der speziellen Beschreibung diskutierten und in den Figuren gezeigten Ausführungsformen nur illustrative Ausführungsbeispiele der vorliegenden Erfindung dar. Dem Fachmann ist im Lichte der hiesigen Offenbarung ein breites Spektrum von Variationsmöglichkeiten an die Hand gegeben. Der Fachmann wird verstehen, dass die Anlehnung an den hier mehrfach zitierten Tri-Clamp-Standard für die Erfindung keineswegs zwingend erforderlich ist. Wegen der weiten Verbreitung dieses Standards wird eine entsprechende Ausgestaltung jedoch als besonders vorteilhaft angesehen. Anpassungen an bestimmte Varianten des Standards (z.B. Sanitary ¾", Sanitary 1 ½", o.a.) sind dabei ebenso möglich wie Anpassungen an andere Standards.

### Bezugszeichenliste

- 10: Anschlussstutzen
- 12: Behälterwandung
- 14: Anlageflansch
- 141: Anlagefläche
- 142: Dichtungsnut
- 143: Arretierungsöffnung
- 16: Rampenring
- 18: Schlitzlasche
- 181: Rastschlitz
- 20: Rastnut
- 22: Ringsegment
- 24: Klemmflansch
- 26: Rampenabschnitt
- 28: Rastwippe
- 281: Hakenabschnitt
- 282: Betätigungsabschnitt
- 283: Wippachse
- 30: Schwenkachse
- 34: Raststift
- 36, 36': Stiftkopf
- 38: weiteres Ringsegment
- 40: Rasthaken
- 42: Anschlussklemme
- 44: Rasthaken

## Patentansprüche

1. Anschlussvorrichtung, umfassend
- einen Leitungsabschnitt (10) mit einem endständigen, nach radial außen kragenden Anlageflansch (14) zur Anlage eines korrespondierenden Anlageflansches eines an den Leitungsabschnitt (10) anzukoppelnden, weiteren Leitungsabschnitts und
- eine Ringsegmentkette (42, 22, 38), umfassend eine Mehrzahl von in einer gemeinsamen Ringebene schwenkbar miteinander verbundenen Ringsegmenten (22, 38), wobei die die Kettenenden bildenden Ringsegmentenden zur Bildung einer ringförmigen Anschlussklemme (42) miteinander verrastbar sind, wobei der Leitungsabschnitt als ein rohrartiger Anschlussstutzen (10) mit axial von der Anlagefläche (141) seines Anlageflansches (14) beabstandeten ersten Gewindemitteln (16) ausgebildet ist und wobei jedes Ringsegment (22, 38) einen nach radial innen kragenden Klemmflansch (24) und axial von diesem beabstandete, zu den ersten Gewindemitteln (16) korrespondierende, zweite Gewindemittel (26) aufweist.

2. Anschlussvorrichtung nach Anspruch 1,
**dadurch gekennzeichnet,**
**dass** die ersten Gewindemittel (16) als eine der Anzahl der Ringsegmente (22, 38) entsprechende Mehrzahl von über den Umfang des Anschlussstutzens (10) verteilten Rampenabschnitten ausgebildet sind, deren Schrägen an ihren dem Anlageflansch (14) abgewandten Seiten angeordnet sind,
und die zweiten Gewindemittel (26) als eine gleiche Mehrzahl von korrespondierend über den Umfang der Anschlussklemme (42) verteilten Rampenabschnitten ausgebildet sind, deren Schrägen an ihren dem Klemmflansch (24) zugewandten Seiten angeordnet sind.

3. Anschlussvorrichtung nach Anspruch 1,
**dadurch gekennzeichnet,**
**dass** die ersten Gewindemittel als eine Mehrzahl von über den Umfang des Anschlussstutzens (10) verteilten, nach radial außen vorstehenden, lokalen Haltevorsprüngen ausgebildet sind
und die zweiten Gewindemittel als eine gleiche Mehrzahl von korrespondierend über den Umfang der Anschlussklemme verteilten Schrägschlitzen in den Wandungen der Ringsegmente ausgebildet sind.

4. Anschlussvorrichtung nach einem der vorangehenden Ansprüche,
**dadurch gekennzeichnet,**
**dass** der Anschlussstutzen (10) nach radial außen wirkende, erste Rastmittel (20) und eines der Ringsegmente (22) korrespondierende, nach radial innen wirkende, zweite Rastmittel (28) aufweist, die in wechselwirkendem Zustand eine Relativrotation der Anschlussklemme (42) zum Anschlussstutzen (10) in Löserichtung verhindern.

5. Anschlussvorrichtung nach Anspruch 4,
**dadurch gekennzeichnet,**
**dass** die zweiten Rastmittel (28) axial zwischen dem Klemmflansch (24) und der Wechselwirkungsfläche der zweiten Gewindemittel (26) angeordnet sind.

6. Anschlussvorrichtung nach einem der Ansprüche 4 bis 5,
**dadurch gekennzeichnet,**
**dass** die zweiten Rastmittel als eine manuell lösbare Rastwippe (28) ausgebildet sind.

7. Anschlussvorrichtung nach einem der vorangehenden Ansprüche,
**dadurch gekennzeichnet,**
**dass** der Anschlussstutzen (10) einen nach radial außen vorstehenden, ersten Rotationsanschlag (18) und eines der Ringsegmente (22) einen korrespondierenden, zweiten Rotationsanschlag (34) aufweist.

8. Anschlussvorrichtung nach Anspruch 7,
**dadurch gekennzeichnet,**
**dass** der eine der Rotationsanschläge als eine Schlitzlasche (18) mit einseitig tangential offenem Rastschlitz (181) und der zweite der Rotationsanschläge als ein axial erstreckter, korrespondierender Raststift (34) ausgebildet ist.

9. Anschlussvorrichtung nach Anspruch 8,
**dadurch gekennzeichnet,**
**dass** der Raststift (34) ein freies Ende aufweist, an welchem ein Stiftkopf (36) angeordnet ist, der breiter als die Breite des Rastschlitzes (181) ist.

10. Anschlussvorrichtung nach einem der Ansprüche 8 bis 9
**dadurch gekennzeichnet,**
**dass** der Raststift (34) an einem der Ringsegmente (22) festgelegt ist.

## Claims

1. A connection device comprising
- a line portion (10) having, at its end, a radially outwardly projecting abutment flange (14) for butting against a corresponding abutment flange of a further line portion which is to be coupled to the line portion (10), and
- a ring-segment chain (42, 22, 38) comprising a plurality of ring segments (22, 38) connected to one another in a pivotable manner in a common ring plane, wherein the ring-segment ends which form the chain ends can be latched to one another to give a ring-form connection clamp (42),
wherein
the line portion is designed in the form of a tubular connection stub (10) with first thread means (16) spaced apart axially from the abutment surface (141) of its abutment flange (14),
and wherein each ring segment (22, 38) has a radially inwardly projecting clamping flange (24) and second thread means (26), which are spaced apart axially from said clamping flange and correspond to the first thread means (16).

2. The connection device according to claim 1,
**characterized in that**
the first thread means (16) are constituted as a plurality of ramp sections corresponding to the number of ring segments (22, 38) and distributed over the circumference of the connection stub (10), with their slopes being arranged on their sides facing away from the abutment flange (14),
and the second thread means (26) are constituted as an equal plurality of corresponding ramp sections distributed over the circumference of the connection clamp (42), with their slopes being arranged on their sides facing the clamping flange (24).

3. The connection device according to claim 1,
**characterized in that**
the first thread means are constituted as a plurality of local locking protrusions, distributed around the circumference of the connection stub (10) and extending radially outward, and the second thread means are constituted as an equal plurality of corresponding tilted slits in the walls of the ring segments correspondingly distributed around the circumference of the connection clamp.

4. The connection device according to any of the preceding claims,
**characterized in that**
the connection stub (10) has radially outward acting first locking means (20) and one of the ring segments (22) has corresponding, radially inward acting second locking means (28), which when engaged prevent a rotation of the connection clamp (42) relative to the connection stub (10) in the unlocking direction.

5. The connection device according to claim 4,
**characterized in that**
the second locking means (28) are arranged axially between the clamping flange (24) and the interacting surface of the second thread means (26).

6. The connection device according to any of claims 4 to 5,
**characterized in that**
the second locking means are constituted as a manually releasable latching rocker (28).

7. The connection device according to any of the preceding claims,
**characterized in that**
the connection stub (10) has a radially outward protruding first rotational stop (18) and one of the ring segments (22) has a corresponding second rotational stop (34).

8. The connection device according to claim 7,
**characterized in that**
one of the rotational stops is constituted as a slotted bracket (18) with a locking slot (181) open tangentially to one side and the second of the rotational stops is constituted as an axially extending corresponding locking pin (34).

9. The connection device according to claim 8,
**characterized in that**
the locking pin (34) has a free end where a pin head (36) is placed that is wider than the width of the locking slot (181).

10. The connection device according to any of claims 8 to 9,
**characterized in that**
the locking pin (34) is fixed to one of the ring segments (22).

## Revendications

1. Dispositif de raccordement, comportant
- une section de conduite (10) dotée, à son extrémité, d'une bride de butée (14) faisant saillie radialement vers l'extérieur pour l'appui d'une bride de butée correspondante d'une autre section de conduite devant être accouplée à la section de conduite (10) et
- une chaîne de segments annulaires (42, 22, 38), comportant une pluralité de segments annulaires (22, 38) reliés de manière pivotante les uns aux autres dans un plan annulaire commun, les extrémités de segments annulaires formant les extrémités de chaîne pouvant être encliquetées l'une avec l'autre pour former un collier de raccordement (42) annulaire,
sachant que
la section de conduite est réalisée sous la forme d'un embout de raccordement (10) tubulaire, dotée de premiers moyens filetés (16) espacés axialement de la surface de butée (141) de sa bride de butée (14),
et que
chaque segment annulaire (22, 38) comprend une bride de serrage (24) faisant saillie radialement vers l'intérieur et des seconds moyens filetés (26) espacés axialement de celle-ci et correspondant aux premiers moyens filetés (16).

2. Dispositif de raccordement selon la revendication 1,
**caractérisé en ce**
**que** les premiers moyens filetés (16) sont réalisés sous forme d'une pluralité de sections de rampe répartis sur la périphérie de l'embout de raccordement (10) correspondant au nombre de segments annulaires (22, 38), dont les pentes sont placées sur leurs côtés opposés à la bride de butée (14),
et **que** les seconds moyens filetés (26) sont réalisés sous forme d'une même pluralité d'éléments de rampe répartis de manière correspondante sur la périphérie du collier de raccordement (42), dont les pentes sont placées sur leurs côtés tournés vers la bride de serrage (24).

3. Dispositif de raccordement selon la revendication 1,
**caractérisé en ce**
**que** les premiers moyens filetés sont réalisés sous forme d'une pluralité d'éléments locaux de retenue en saillie, faisant saillie radialement vers l'extérieur et répartis sur la périphérie de l'embout de raccordement (10)
et **que** les seconds moyens filetés sont réalisés sous la forme d'une même pluralité de fentes inclinées dans les parois des segments annulaires, réparties de manière correspondante sur la périphérie du collier de raccordement.

4. Dispositif de raccordement selon l'une des revendications précédentes,
**caractérisé en ce**
**que** l'embout de raccordement comporte des premiers moyens d'encliquetage (20) agissant radialement vers l'extérieur et l'un des segments annulaires (22) comporte des seconds moyens d'encliquetage (28) correspondants agissant radialement vers l'intérieur, pour empêcher une rotation relative du collier de raccordement (42), à l'état interactif, par rapport à l'embout de raccordement (10) dans le sens du desserrage.

5. Dispositif de raccordement selon la revendication 4,
**caractérisé en ce**
**que** les seconds moyens d'encliquetage (28) sont disposés axialement entre la bride de serrage (24) et la surface d'interaction des seconds moyens d'encliquetage (26).

6. Dispositif de raccordement selon l'une des revendications 4 à 5,
**caractérisé en ce**
**que** les seconds moyens d'encliquetage sont réalisés sous forme d'une manette d'encliquetage (28) à desserrage manuel.

7. Dispositif de raccordement selon l'une des revendications précédentes,
**caractérisé en ce**
**que** l'embout de raccordement (10) comporte une première butée de rotation (18) faisant saillie radialement vers l'extérieur et l'un des segments annulaires (22) comporte une seconde butée de rotation (34) correspondante.

8. Dispositif de raccordement selon la revendication 7,
**caractérisé en ce**
**que** l'une des butées de rotation est réalisée sous la forme d'un rabat à fente (18) comportant une fente d'encliquetage (181) ouverte tangentiellement sur un côté et que la seconde butée de rotation est réalisée sous la forme d'une tige d'encliquetage (34) correspondante, qui s'étend axialement.

9. Dispositif de raccordement selon la revendication 8,
**caractérisé en ce**
**que** la tige d'encliquetage (34) présente une extrémité libre à laquelle est disposée une tête de tige (36) plus large que la largeur de la fente d'encliquetage (181).

10. Dispositif de raccordement selon l'une des revendications 8 à 9,
**caractérisé en ce**
**que** la tige d'encliquetage (34) est fixée à l'un des segments annulaires (22).
